# EUROPÄISCHE PATENTSCHRIFT

(11) **EP 2 689 486 B1**
(45) Veröffentlichungstag und Bekanntmachung des Hinweises auf die Patenterteilung: **22.07.2015**
(21) Anmeldenummer: 12714703.1
(22) Anmeldetag: 16.04.2012
(51) Int. Cl.: H01M 8/04

(54) **BEFEUCHTUNGSZELLE**
HUMIDIFICATION CELL
CELLULE D'HUMIDIFICATION

(30) Priorität: 19.05.2011 EP 11166699
(43) Veröffentlichungstag der Anmeldung: 29.01.2014
(73) Patentinhaber: Siemens Aktiengesellschaft, 80333 München (DE)
(72) Erfinder: BRANDT, Torsten, 91301 Forchheim (DE); DATZ, Armin, 91099 Poxdorf (DE); HAMMERSCHMIDT, Albert, 91056 Erlangen (DE); HOFFMANN, Joachim, 90559 Burgthann (DE); LATZEL, Silke, 91077 Kleinsendelbach (DE); MATTEJAT, Arno, 91056 Erlangen (DE)
(86) Internationale Anmeldenummer: PCT/EP2012/056889
(87) Internationale Veröffentlichungsnummer: WO 2012/156160

(56) Entgegenhaltungen:
- EP-A1- 1 298 749
- EP-A1- 2 139 061
- JP-A- 2009 238 376
- US-A1- 2007 104 987
- US-A1- 2010 323 251

## Beschreibung

Die Erfindung bezieht sich auf eine Befeuchtungszelle gemäß Oberbegriff des Patentanspruchs 1; eine derartige Befeuchtungszelle ist beispielsweise aus der WO 2009/101036 A1 bekannt.

In einer Brennstoffzelle wird durch die elektrochemische Verbindung von Wasserstoff (H₂) und Sauerstoff (O₂) an einer Elektrode zu Wasser (H₂O) elektrischer Strom mit hohem Wirkungsgrad erzeugt. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Die Brennstoffzellen einer Brennstoffzellenanordnung werden während ihres Betriebs mit Betriebsgasen - also einem wasserstoffhaltigen Brenngas und einem sauerstoffhaltigen Oxidationsgas - versorgt. Manche Ausführungsformen von Niedertemperatur-Brennstoffzellen, insbesondere Brennstoffzellen mit einer Polymer-Elektrolyt-Membran (PEM-Brennstoffzellen), benötigen zum Betrieb befeuchtete Betriebsgase. Diese Betriebsgase werden in einer geeigneten Einrichtung, wie beispielsweise einem Flüssigkeitsringverdichter oder einem Membranbefeuchter, mit Wasserdampf gesättigt. Die Befeuchtungseinrichtung und eventuelle weitere Versorgungseinrichtungen bilden zusammen mit der Brennstoffzellenanordnung eine Brennstoffzelleneinrichtung.

Werden die Betriebsgase durch lange Betriebsgaszuleitungen vom Befeuchter zur Brennstoffzellenanordnung geleitet, so kann auf diesem Weg die Temperatur eines befeuchteten Betriebsgases durch Verlust von Wärme an die Umgebung sinken. Dies führt zur Kondensation von Befeuchtungswasser. Die Betriebsgase werden anschließend in den Brennstoffzellen wieder aufgeheizt, wodurch sich ihre relative Feuchtigkeit verringert. Hierdurch kann der stets feucht zu haltende und extrem trockenheitsempfindliche Elektrolyt geschädigt werden, wodurch sich dessen Lebensdauer verringert. Es ist daher wünschenswert, dass der Befeuchter möglichst nahe an den Brennstoffzellen angeordnet ist.

Aus der EP 1 435 121 B1 ist ein Brennstoffzellenblock mit einem Stapel aus planaren Brennstoffzellen und einem Stapel aus planaren Befeuchtungszellen bekannt. Beide Stapel sind unmittelbar benachbart im Brennstoffzellenblock angeordnet. Die Befeuchtungszellen sind als Membranbefeuchter ausgebildet, bei denen, ausgehend von einer ersten Außenplatte, zwischen der ersten Außenplatte und einer zweiten Außenplatte ein Gasraum, ein Befeuchtungswasserraum und eine die beiden Räume trennende wasserdurchlässige Membran angeordnet sind, wobei zwischen der Membran und der ersten Außenplatte ein wasserdurchlässiges Stützelement angeordnet ist.

Bevor die Betriebsgase den Brennstoffzellen des Brennstoffzellenstapels zugeleitet werden, durchströmen sie die Befeuchtungszellen, werden dort befeuchtet und strömen anschließend, ohne den Brennstoffzellenblock wieder zu verlassen, in den Brennstoffzellenstapel.

In dem Befeuchtungswasserraum, d.h. auf der einen Seite der Membran, strömt das Befeuchtungswasser und in dem Gasraum, d.h. auf der anderen Seite der Membran, strömt das Betriebsgas durch Kanäle, die in die jeweilige Außenplatte eingearbeitet sind. Um zu verhindern, dass entlang von Stegen der Außenplatten die Membran durch die Stege abgedeckt wird, so dass kein Befeuchtungswasser bzw. Betriebsgas zur Membran gelangen kann, ist zwischen der Membran und einer oder beiden Außenplatten jeweils ein wasserdurchlässiges Stützelement angeordnet. Hierdurch wird die Membran im Bereich des Stützelements von der Außenplatte beabstandet gehalten und somit gewährleistet, dass großflächig Befeuchtungswasser bzw. Betriebsgas zur Membran dringen kann, wodurch die Befeuchtungsleistung vergrößert wird. Dies ist besonders wichtig bei der Verwendung großflächiger Strukturen in der Außenplatte. Je nachdem, auf welcher Seite der Membran das Stützelement angeordnet ist, durchdringt das Befeuchtungswasser entweder zuerst das Stützelement und dann die Membran oder zuerst die Membran und dann das Stützelement und gelangt so zum zu befeuchtenden Betriebsgas.

Zumindest das Stützelement zwischen der Membran und der zweiten Außenplatte besteht hierbei vorteilhaft aus Kohlepapier. Das Kohlepapier ist stabil gegen die verwendeten Betriebsmedien bzw. das Membranmaterial und hat bevorzugt hydrophile Eigenschaften, d.h. wird durch das Wasser vollständig benetzt. Das Kohlepapier garantiert auf Grund der Hydrophilie und der großen Oberfläche eine gute Befeuchtung und mögliche, durch den hydrostatischen Druck entstehende Wassertropfen werden auf der Oberfläche verteilt und im Gasraum durch den Gasstrom gasförmig mitgenommen. Die mechanischen Kräfte zwischen der Membran und der oder den Außenplatten werden durch das Kohlepapier gut aufgenommen, zudem wird ein direkter Kontakt zwischen der Membran und der oder den Außenplatten und somit Korrosion vermieden.

Aus der WO 2009/101036 A1 ist es bekannt, bei einer derartigen Befeuchtungszelle anstatt von Kohlepapier ein Gewebe zu verwenden, das aus einem Kunststoff besteht. Auch hierdurch kann eine gute Gasbefeuchtung erreicht werden, ohne dass in großem Umfang durch das Betriebsgas in dem Gasraum flüssiges Wasser in Form von Wassertröpfchen mitgerissen wird, was zu Einschränkungen in der Funktionsfähigkeit von Brennstoffzellen durch den Wassereintrag führen kann.

Es ist Aufgabe vorliegender Erfindung, bei einer derartigen Befeuchtungszelle die Betriebseigenschaften noch weiter zu verbessern. Die Befeuchtungszelle soll sich dabei insbesondere auch für einen Betrieb mit einer sprungartigen Veränderung des Gasvolumenstromes eignen, wie er beispielsweise durch Lastwechsel an den Brennstoffzellen hervorgerufen wird.

Die Lösung dieser Aufgabe gelingt durch eine Befeuchtungszelle mit den Merkmalen des Patentanspruchs 1. Vorteilhafte Ausgestaltungen sind jeweils Gegenstand der Unteransprüche.

Erfindungsgemäß ist das Gewebe des ersten Stützelementes aus einem Fluorkunststoff ausgebildet, der zumindest teilweise, vorzugsweise vollständig, aus einem alternierenden Coplymerisat aus Ethylen und Chlortrifluorethylen (E-CTFE) besteht. Wie sich gezeigt hat, zeichnen sich derartige Gewebe mit einer guten Beständigkeit gegen die Betriebsgase von Brennstoffzellen (insbesondere gegen Sauerstoff), einer für die Gasbefeuchtung hinreichend großen Oberfläche und einem guten Halte-/Speichervermögen für Wasser (Hydrophilie) aus. Insbesondere können sie aber auch mit einem sehr guten Benetzungsverhalten für flüssiges Wasser ausgestattet werden. Hierdurch kann ein Austrag und Mitschleppen von flüssigem Wasser bei Lastwechseln oder anderen instationären Betriebszuständen der Brennstoffzellen, die mit einer sprungartigen Veränderung des Gasvolumenflusses einhergehen, vermieden werden. Somit wird verhindert, dass ein Teil des an der Oberfläche des Gewebes haftenden Wassers in flüssiger Form mitgerissen wird und aus dem Befeuchterbereich in die Brennstoffzellen gelangt, wo es zu Spannungseinbrüchen kommen kann.

Auf Grund ihrer mechanischen Eigenschaften (Verformbarkeit, Festigkeit) sind diese Materialien in der Lage, die beim Betrieb der Befeuchtungszelle auftretenden mechanischen Kräfte aufzunehmen, ohne Schaden zu nehmen bzw. die benachbarten Bauteile zu beschädigen.

Weiterhin ist von Bedeutung, dass ein derartiges Gewebe mechanisch mit einer derartigen Flexibilität ausgestattet werden kann, dass es sich sehr eben auf die Membran legt, wodurch sich ebenfalls ein gutes Verhalten bei einer sprungartigen Veränderung des Gasvolumenflusses bei einem Lastwechsel einstellt.

Die vorstehend erläuterten Eigenschaften der guten Beständigkeit gegen die Brennstoffzellenbetriebsgase, insbesondere gegenüber Sauerstoff, der guten Befeuchtungsleistung und des guten Verhaltens bei Lastwechseln, werden optimal durch ein Gewebe erfüllt, bei dem der Fluorkunststoff zumindest teilweise, vorzugsweise ganz, aus einem alternierenden Copolymerisat aus Ethylen und Chlortrifluorethylen (E-CTFE) besteht.

Bevorzugt ist zwischen der Membran und der zweiten Außenplatte ein zweites wasserdurchlässiges Stützelement angeordnet, das vorzugsweise ebenfalls aus einem Gewebe gefertigt ist, das aus einem Fluorkunststoff besteht. Hierdurch kann die Membran besonders zuverlässig in einer gewünschten Position gehalten werden.

Gemäß einer vorteilhaften Ausgestaltung ist der Fluorkunststoff kalandriert, d.h. durch ein Kalanderverfahren hergestellt.

Die guten mechanischen Eigenschaften lassen sich vor allem dann erzielen, wenn das Gewebe eine Köper-Bindung bzw. eine Köper-Konstruktion aufweist (auch kurz als "Köper" oder "Twill" bezeichnet).

Gemäß einer weiteren vorteilhaften Ausgestaltung weist das Gewebe einen Luftdurchlass von 220 bis 300 l/m²s bei 2 mbar, insbesondere von 260 l/m²s bei 2 mbar, auf.

Das Gewebe weist bevorzugt eine Dicke von 200 bis 500 µm, insbesondere von 370 µm, auf.

Das Gewebe ist dabei von Vorteil hinsichtlich seiner Dicke und des Durchmessers seiner Poren an die Steifigkeit der Membran und an die Drücke in den an die Membran angrenzenden Räumen derart angepasst, dass sich während des Betriebs der Befeuchtungszelle auch bei Lastwechseln der Brennstoffzellen die Membran nicht durch die Poren zwängt und die Außenplatte berührt. Hierdurch können Beeinträchtigungen in der Befeuchtungsleistung und Korrosionsprobleme im Fall metallener Außenplatten vermieden werden. Das Gewebe ist dann trotz Poren ähnlich "dicht" wie ein entsprechendes Kohlepapier.

Eine besonders stabile Lagerung der Membran und ein besonders einfacher Aufbau der Befeuchtungszelle werden dadurch erreicht, dass die erste Außenplatte, das erste Stützelement, die Membran, das zweite Stützelement und die zweite Außenplatte jeweils aneinander anliegen. Hierbei weisen die Außenplatten zweckmäßigerweise Kanäle oder Prägungen auf, durch die das Betriebsgas oder das Befeuchtungswasser entlang der Außenplatte und entlang des an der Außenplatte anliegenden Stützelements strömen kann. Bei dieser Ausgestaltung bildet die Befeuchtungszelle einen besonders stabilen und weitgehend gegen Druck unempfindlichen Verbund. Diese Ausgestaltung der Erfindung ist besonders geeignet bei sehr flachen Befeuchtungszellen mit einem sehr flachen Gasraum und/oder Befeuchtungswasserraum.

Das Stützelement kann die dem Befeuchtungswasser oder dem Betriebsgas zugängliche Fläche der Membran vollständig bedecken. Eine gute Stütze der Membran ist jedoch auch gewährleistet, wenn das Stützelement, beispielsweise durch Aussparungen im Stützelement, nur einen Teil der flachen Seite der Membran bedeckt. Hierdurch erfolgt ein ungehinderter Zugang vom Befeuchtungswasser und Betriebsgas zur Membran, wodurch die Befeuchtungsleistung der Befeuchtungszelle erhöht wird.

Ausführungsbeispiele der Erfindung werden anhand von fünf Figuren näher erläutert. Dabei zeigen:
- FIG 1: eine Draufsicht auf eine aufgeschnitten dargestellte Befeuchtungszelle;
- FIG 2: einen Schnitt durch die Befeuchtungszelle aus FIG 1;
- FIG 3: einen weiteren Schnitt durch die Befeuchtungszelle von FIG 1;
- FIG 4: eine Brennstoffzelleneinrichtung;
- FIG 5: eine Messung der Befeuchtungsleistung bei einem Gewebe aus E-CTFE im Vergleich zu Kohlepapier;
- FIG 6: eine Messung der Druckverluste bei einem Gewebe aus E-CTFE im Vergleich zu Kohlepapier und
- FIG 7: den Flüssigwasseranteil am Ausgang eines Befeuchters bei einem Lastsprung.

Gleiche Gegenstände sind in den Figuren mit gleichen Bezugszeichen versehen.

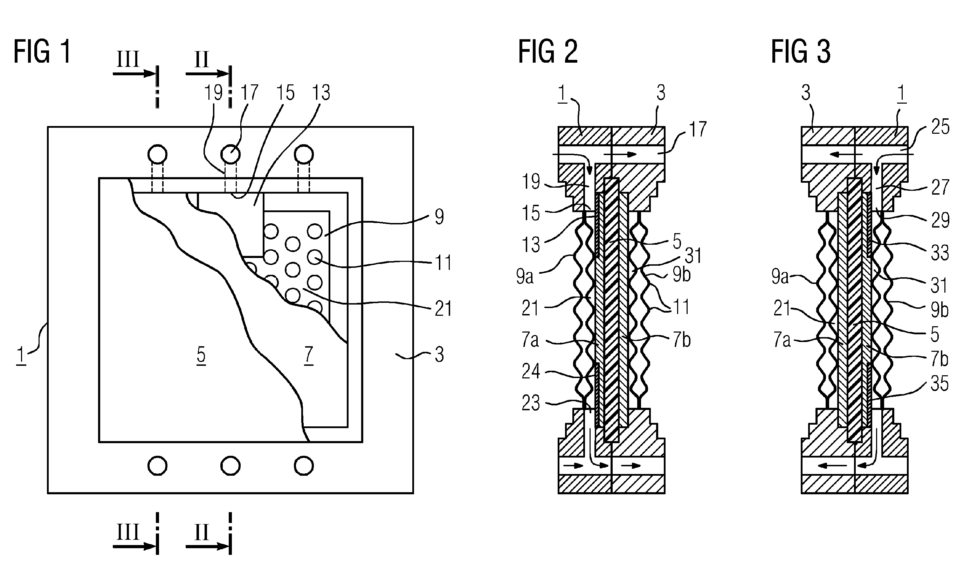

In FIG 1 ist in einer schematischen Draufsicht der grundsätzliche Aufbau eine rechteckigen und planaren Befeuchtungszelle 1 dargestellt, die eine in einem Rahmen aus einem Dichtmaterial 3 eingebettete und aufgeschnitten dargestellte Membran 5 umfasst. Unter der Membran 5 ist in ebenfalls aufgeschnittener Darstellung ein Stützelement 7 sichtbar. Unterhalb des Stützelements 7 ist eine Außenplatte 9 dargestellt, die als ein Blech mit einer Prägestruktur 11 ausgestaltet ist. Die Prägestruktur 11 besteht aus runden Erhöhungen bzw. Vertiefungen innerhalb der Außenplatte 9. Zwischen der Außenplatte 9 und dem Stützelement 7 ist eine Abdeckvorrichtung 13 angebracht. Die Abdeckvorrichtung 13 ist im Bereich eines Betriebsmitteleinlasses 15 angeordnet.

FIG 2 zeigt einen Schnitt durch die Befeuchtungszelle 1 entlang der Linie II-II, wobei jedoch nun beidseitig der Membran 5 jeweils ein Stützelement 7a bzw. 7b und eine Außenplatte 9a bzw. 9b angeordnet sind. Im Detail umfasst die Befeuchtungszelle 1 eine erste Außenplatte 9a und eine zweite Außenplatte 9b. Ausgehend von der ersten Außenplatte 9a sind zwischen der ersten Außenplatte 9a und der zweiten Außenplatte 9b ein Gasraum 21, ein Befeuchtungswasserraum 31 und die die beiden Räume 21, 31 trennende wasserdurchlässige Membran 5 angeordnet. Zwischen der ersten Außenplatte 9a und der Membran 5 ist ein erstes wasserdurchlässiges Stützelement 7a und zwischen der zweiten Außenplatte 9b und der Membran 5 ist ein zweites wasserdurchlässiges Stützelement 7b angeordnet.

Die Befeuchtungszelle 1 ist Teil eines Befeuchtungszellenstapels einer Brennstoffzelleneinrichtung. Während des Betriebs der Befeuchtungszelle 1 strömt Brenngas durch den Axialkanal 17 der Befeuchtungszelle 1. Der Axialkanal 17 ist parallel zur Stapelrichtung des Befeuchtungszellenstapels ausgerichtet. Vom Axialkanal 17 zweigt jeweils ein Radialkanal 19 zu einer der Befeuchtungszellen 1 des Befeuchtungszellenstapels ab. Das Brenngas strömt durch den Radialkanal 19 und im weiteren Verlauf durch den Betriebsmitteleinlass 15 und gelangt anschließend in den Gasraum 21 der Befeuchtungszelle 1. Nach Austritt aus dem Betriebsmitteleinlass 15 streicht das Brenngas ohne signifikante Turbulenzen zu bilden einerseits an der Abdeckvorrichtung 13 und andererseits an der Außenplatte 9 der Befeuchtungszelle 1 entlang.

Die erste Außenplatte 9a ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt sowohl das durch die Befeuchtungszelle 1 strömende Brenngas wie auch das Befeuchtungswasser auf annähernd die Temperatur der Brennstoffzellen der Brennstoffzelleneinrichtung.

Im Gasraum 21 wird das Brenngas mit Befeuchtungswasser befeuchtet und gelangt nach Durchströmen des Gasraums 21 zum Betriebsmittelauslass 23 des Gasraums 21. Durch einen weiteren Radialkanal und einen weiteren Axialkanal strömend verlässt es im befeuchteten Zustand die Befeuchtungszelle 1 wieder. Auch im Bereich des Betriebsmittelauslasses 23 ist das Stützelement 7a durch eine weitere Abdeckvorrichtung 24 abgedeckt, um Turbulenzen beim Einströmen des Brenngases in den Betriebsmittelauslass 23 zu verhindern.

FIG 3 zeigt einen Schnitt durch die Befeuchtungszelle 1 entlang der in FIG 1 dargestellten Linie III-III, wobei auch hier nun beidseitig der Membran 5 jeweils ein Stützelement 7a bzw. 7b und eine Außenplatte 9a bzw. 9b angeordnet sind. Dieser Schnitt ist entlang eines Axialkanals 25 geführt, der während des Betriebs der Befeuchtungszelle 1 Befeuchtungswasser führt. Das Befeuchtungswasser strömt durch den Axialkanal 25 und gelangt durch den Radialkanal 27 zu einem weiteren Betriebsmitteleinlass 29. Diesen Betriebsmitteleinlass 29 durchströmend gelangt das Befeuchtungswasser in den Befeuchtungswasserraum 31 und strömt zwischen die zweite Außenplatte 9b und eine Abdeckvorrichtung 33. Anschließend gelangt das Befeuchtungswasser zum zweiten Stützelement 7b.

Ein Teil des Befeuchtungswassers durchdringt das zweite Stützelement 7b und gelangt zur Membran 5. Nach Durchtreten dieser wasserdurchlässigen Membran 5 durchdringt das Befeuchtungswasser auch das an der anderen Seite der Membran 5 angeordnete erste Stützelement 7a. An der dem Gasraum 21 zugewandten Seite des Stützelements 7a verdampft das Befeuchtungswasser und befeuchtet somit das durch den Gasraum 21 strömende Brenngas. Ein weiterer Teil des Befeuchtungswassers durchströmt den Befeuchtungswasserraum 31 ungenutzt, streicht entlang einer weiteren Abdeckvorrichtung 35 und verlässt die Befeuchtungszelle 1 nach Durchströmen durch einen Radialkanal und einen weiteren Axialkanal wieder.

Auch die zweite Außenplatte 9b ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt das durch den Befeuchtungswasserraum 31 strömende Befeuchtungswasser auf annähernd die Temperatur der Brennstoffzellen der Brennstoffzelleneinrichtung.

Die beiden Stützelemente 7a und 7b liegen lösbar an der wasserdurchlässigen Membran 5 an und bedecken die flachen Außenseiten der Membran 5 bis auf eine schmale Außenkante vollständig. Die beiden Stützelemente 7a und 7b bilden zusammen mit der Membran 5 eine Membran-Anordnung, die zwischen den beiden Außenplatten 9a, 9b der Befeuchtungszelle 1 eingeklemmt ist. Die Stützelemente 7a, 7b liegen somit auf der einen Seite an der Membran 5 an und auf der anderen Seite an einer der Außenplatten 9a, 9b an. Durch die Stützelemente 7a, 7b wird die Membran 5 fest in ihrer Position gehalten. Außerdem bewirken die Stützelemente 7a, 7b, dass die Membran 5 an keiner Stelle die Außenplatten 9a, 9b berühren kann und somit von einem Teil der Außenplatten 9a, 9b abgedeckt wird.

Die Stützelemente 7a, 7b bestehen hierbei aus einem Gewebe, das aus einem alternierenden Copolymerisat aus Ethylen und Chlortrifluorethylen (E-CTFE) gefertigt und im Herstellungsprozess kalandriert worden ist. Das Gewebe weist dabei eine Köper-Bindung auf. Weiterhin weist das Gewebe einen Luftdurchlass von 220 bis 300 l/m²s bei 2 mbar, insbesondere von 260 l/m²s bei 2 mbar, bei einer Dicke von 200 bis 500 µm, insbesondere von 370 µm, auf. Ein derartiges Gewebe ist beispielsweise von dem Hersteller Sefar unter der Bezeichnung "Sefar Tetex® Mono 08-1050-K 039" erhältlich.

Bevorzugt sind hierbei das Gewebe hinsichtlich seiner Dicke und des Durchmessers seiner Poren und die Membran hinsichtlich ihrer Steifigkeit derart aufeinander und auf den Druck in den an die Membran angrenzenden Räumen abgestimmt, dass sich beim Betrieb der Befeuchtungszelle die Membran nicht durch die Poren zwängt und die Außenplatte berührt.

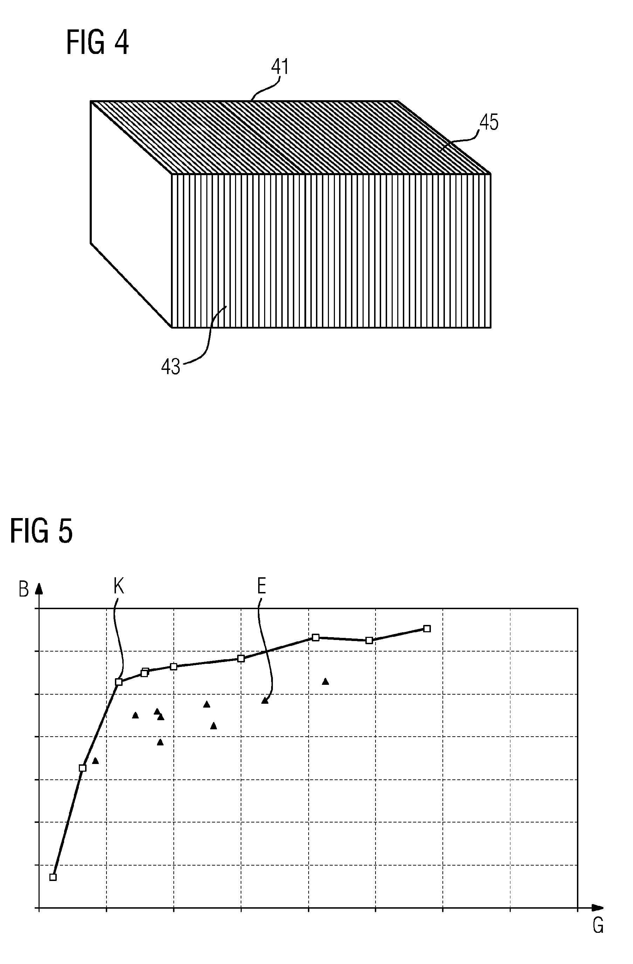

In FIG 4 ist in schematischer Darstellung eine Brennstoffzelleneinrichtung 41 in Form eines Brennstoffzellenblocks gezeigt. Die Brennstoffzelleneinrichtung 41 umfasst einen Stapel aus Befeuchtungszellen 43 und einen Stapel aus Brennstoffzellen 45. Die Befeuchtungszellen 43 weisen die gleiche Breite und Höhe auf wie die Brennstoffzellen 45. Hierdurch hat der Brennstoffzellenblock entlang der Stapelrichtung der Befeuchtungszellen 43 und der Brennstoffzellen 45 entlang einer Stapelachse eine gleichmäßige Breite und Höhe. Außerdem haben die Befeuchtungszellen 43 die gleiche Dicke wie die Brennstoffzellen 45, so dass die äußere Form und die äußeren Abmessungen der Befeuchtungszellen 43 gleich sind wie die äußere Form und die äußeren Abmessungen der Brennstoffzellen 45.

Messungen der Strom-Spannungskennlinien der Brennstoffzellen, der aufgenommenen Befeuchtungsleistung und der Druckverluste bei Verwendung von Stützelementen 7a, 7b aus vorstehend erläutertem Gewebe aus E-CTFE zeigen im Vergleich zu Stützelementen 7a, 7b aus Kohlepapier nur wenige Unterschiede, d.h. die Betriebseigenschaften einer Befeuchtungszelle mit Stützelementen aus Gewebe aus E-CTFE sind nahezu vergleichbar der Betriebseigenschaften einer Befeuchtungszelle mit Stützelementen aus Kohlepapier, mit dem zusätzlichen Vorteil, dass ein Ablösen von Kohlefasern und somit Verstopfungen an engen Gasdurchlässen der Medienströme vermieden werden können.

FIG 5 zeigt die Befeuchtungsleistung B am Ausgang eines Befeuchters, der aus 4 Befeuchtungszellen besteht, bezogen auf den Gasstrom G bei Brennstoffzellenbetrieb für einen Ausgangsdruck von 2.6 bar bei Verwendung von Kohlepapier K und bei Verwendung eines Gewebes E aus E-CTFE.

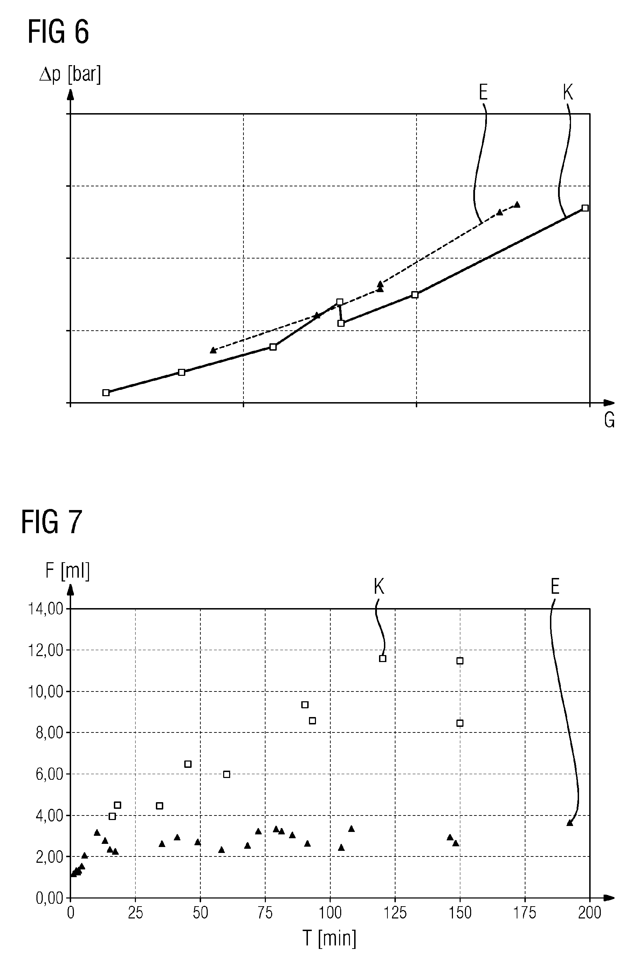

FIG 6 zeigt eine Messung der Druckverluste Δp zwischen Befeuchtereintritt und -austritt für einen Befeuchter, der aus 4 Befeuchtungszellen besteht, bezogen auf den Gasstrom G bei Brennstoffzellenbetrieb, für einen Ausgangsdruck von 2.6 bar bei Verwendung von Kohlepapier K und bei Verwendung eines Gewebes E aus E-CTFE.

Wie aus FIG 5 und 6 ersichtlich ist, ist im Fall des Gewebes E aus E-CTFE die Befeuchtungsleistung nur um ca. 10 % geringer als im Fall von Kohlepapier K und die Druckverluste sind nur um etwa 10% größer als im Fall von Kohlepapier K.

FIG 7 zeigt den Flüssigwasseranteil F am Ausgang des Befeuchters bei einem Lastsprung in Abhängigkeit von der Betriebszeit T vor dem Lastsprung. Wie aus FIG 7 ersichtlich ist, ist der Flüssigwasseranteil F im Fall des Gewebes E aus E-CTFE deutlich kleiner als im Fall von Kohlepapier K, wobei der Unterschied mit steigenden Betriebszeiten erst stark zunimmt und dann relativ konstant bleibt.

## Patentansprüche

1. Befeuchtungszelle (1) einer Brennstoffzelleneinrichtung (41) mit einer ersten Außenplatte (9a) und einer zweiten Außenplatte (9b), wobei ausgehend von der ersten Außenplatte (9a) zwischen der ersten Außenplatte (9a) und der zweiten Außenplatte (9b) ein Gasraum (21), ein Befeuchtungswasserraum (31) und eine die beiden Räume (21, 31) trennende wasserdurchlässige Membran (5) angeordnet ist, wobei zwischen der ersten Außenplatte (9a) und der Membran (5) ein erstes wasserdurchlässiges Stützelement (7a) angeordnet ist, wobei das erste Stützelement (7a) aus einem Gewebe gefertigt ist, das aus einem Kunststoff besteht,
**dadurch gekennzeichnet, dass** der Kunststoff ein Fluorkunststoff ist, der zumindest teilweise, vorzugsweise vollständig, aus einem alternierenden Copolymerisat
aus Ethylen und Chlortrifluorethylen (E-CTFE) besteht.

2. Befeuchtungszelle (1) nach Anspruch 1,
**dadurch gekennzeichnet, dass** zwischen der Membran (5) und der zweiten Außenplatte (9b) ein zweites wasserdurchlässiges Stützelement (7b) angeordnet ist, das ebenfalls aus einem Gewebe gefertigt ist, das aus einem Kunststoff besteht, wobei der Kunststoff ein Fluorkunststoff ist.

3. Befeuchtungszelle (1) nach einem der vorhergehenden Ansprüche,
**dadurch gekennzeichnet, dass** der Fluorkunststoff kalandriert ist.

4. Befeuchtungszelle (1) nach einem der vorhergehenden Ansprüche,
**dadurch gekennzeichnet, dass** das Gewebe eine Köper-Bindung aufweist.

5. Befeuchtungszelle (1) nach einem der vorhergehenden Ansprüche,
**dadurch gekennzeichnet, dass** das Gewebe einen Luftdurchlass von 220 bis 300 l/m²s bei 2 mbar, insbesondere von 260 l/m²s bei 2 mbar, aufweist.

6. Befeuchtungszelle (1) nach einem der vorhergehenden Ansprüche,
**dadurch gekennzeichnet, dass** das Gewebe eine Dicke von 200 bis 500 µm, insbesondere von 370 µm, aufweist.

7. Befeuchtungszelle (1) nach einem der vorhergehenden Ansprüche, **dadurch gekennzeichnet, dass** das Gewebe hinsichtlich seiner Dicke und des Durchmessers seiner Poren und die Membran (5) hinsichtlich ihrer Steifigkeit derart aufeinander und auf die Drücke in den an die Membran (5) angrenzenden Räumen (21, 31) abgestimmt sind, dass sich beim Betrieb der Befeuchtungszelle (1) die Membran (5) nicht durch die Poren zwängt und die Außenplatte (9a bzw. 9b) berührt.

8. Befeuchtungszelle (1) nach einem der Ansprüche 2 bis 7,
**dadurch gekennzeichnet, dass** die erste Außenplatte (9a), das erste Stützelement (7a), die Membran (5), das zweite Stützelement (7b) und die zweite Außenplatte (9b) jeweils aneinander anliegen.

## Claims

1. Humidification cell (1) of a fuel cell apparatus (41) having a first outer plate (9a) and a second outer plate (9b), wherein, starting from the first outer plate (9a), a gas chamber (21), a humidification water chamber (31) and a water-permeable membrane (5) separating the two chambers (21, 31) are arranged between the first outer plate (9a) and the second outer plate (9b), wherein a first water-permeable support element (7a) is arranged between the first outer plate (9a) and the membrane (5), wherein the first support element (7a) is manufactured from a fabric consisting of a plastic,
**characterised in that** the plastic is a fluoropolymer which consists at least partially, preferably completely, of an alternating copolymer made of ethylene and chlorotrifluoroethylene (E-CTFE).

2. Humidification cell (1) according to claim 1,
**characterised in that** a second water-permeable support element (7b) is arranged between the membrane (5) and the second outer plate (9b) and is likewise manufactured from a fabric consisting of a plastic, the plastic being a fluoropolymer.

3. Humidification cell (1) according to one of the preceding claims,
**characterised in that** the fluoropolymer is calandered.

4. Humidification cell (1) according to one of the preceding claims,
c h a r a c t e r i s e d i n t h a t the fabric has a twill weave.

5. Humidification cell (1) according to one of the preceding claims,
c h a r a c t e r i s e d i n t h a t the fabric has an air permeability of 220 to 300 l/m²s at 2 mbar, in particular of 260 l/m²s at 2 mbar.

6. Humidification cell (1) according to one of the preceding claims
**characterised in that** the fabric has a thickness of 200 to 500 µm, in particular of 370 µm.

7. Humidification cell (1) according to one of the preceding claims, **characterised in that** the fabric, in terms of its thickness and the diameter of its pores, and the membrane (5), in terms of its rigidity, are matched to one another and to the pressures in the chambers (21, 31) adjoining the membrane (5) in such a way that the membrane (5) does not squeeze through the pores during the operation of the humidification cell (1) and come into contact with the outer plate (9a or 9b).

8. Humidification cell (1) according to one of claims 2 to 7,
**characterised in that** the first outer plate (9a), the first support element (7a), the membrane (5), the second support element (7b) and the second outer plate (9b) butt against one another in each case.

## Revendications

1. Cellule (1) d'humidification d'un dispositif (41) de piles à combustible, comprenant une première plaque (9a) extérieure et une deuxième plaque (9b) extérieure, dans laquelle il est disposé en partant de la première plaque (9a) extérieure entre la première plaque (9a) extérieure et la deuxième plaque (9b) extérieure, un espace (21) pour du gaz, un espace (31) pour de l'eau d'humidification et une membrane (5) perméable à l'eau séparant les deux espaces (21, 31) dans laquelle un premier élément (7a) d'appui perméable à l'eau est disposé entre la première plaque (9a) extérieure et la membrane (5), le premier élément (7a) d'appui étant fabriqué en un tissu en une matière plastique. **caractérisé en ce que** la matière plastique est une matière plastique fluorée, qui est constituée au moins en partie, de préférence complètement, d'un copolymère alterné d'éthylène et de chlorotrifluoroéthylène (E-CTFE).

2. Cellule (1) d'humidification suivant la revendication 1,
**caractérisée en ce qu'**entre la membrane (5) et la deuxième plaque (9b) extérieure est disposé un deuxième élément (7b) d'appui perméable à l'eau, qui est fabriqué également d'un tissu en une matière plastique, la matière plastique étant une matière plastique fluorée.

3. Cellule (1) d'humidification suivant l'une des revendications précédentes,
**caractérisée en ce que** la matière plastique fluorée est calandrée.

4. Cellule (1) d'humidification suivant l'une des revendications précédentes,
**caractérisée en ce que** le tissu a une armure sergée.

5. Cellule (1) d'humidification suivant l'une des revendications précédentes,
**caractérisée en ce que** le tissu a une perméabilité à l'air de 220 à 300 l/m²s à 2 mbar, notamment de 260 l/m²s à 2 mbar.

6. Cellule (1) d'humidification suivant l'une des revendications précédentes,
**caractérisée en ce que** le tissu a une épaisseur de 200 à 500 µm, notamment de 370 µm.

7. Cellule (1) d'humidification suivant l'une des revendications précédentes,
**caractérisée en ce que** l'épaisseur et le diamètre des pores du tissu et la raideur de la membrane (5) sont adaptés les uns aux autres et aux pressions dans les espaces (21, 31) voisins de la membrane (5) de manière à ce que lorsque la cellule (1) d'humidification est en fonctionnement, la membrane (5) ne soit pas forcée dans les pores et touche la plaque (9a ou 9b) extérieure.

8. Cellule (1) d'humidification suivant l'une des revendications 2 à 7,
**caractérisée en ce que** la plaque (9a) extérieure, le premier élément (7a) d'appui, la membrane (5), le deuxième élément (7b) d'appui et la deuxième plaque (9b) extérieure s'appliquent respectivement les uns aux autres.
